# NOUVEAU FASCICULE DE BREVET EUROPEEN

(11) **EP 3 589 906 B2**
(45) Date de publication et mention de la décision concernant l'opposition: **14.01.2026**
(45) Mention de la délivrance du brevet: 24.05.2023
(21) Numéro de dépôt: 18710113.4
(22) Date de dépôt: 28.02.2018
(51) Int. Cl.: F28D 20/02, H01M 10/60

(54) **DISPOSITIF THERMIQUE A EVACUATION DE SECURITE**
THERMISCHE VORRICHTUNG MIT SICHERER ENTLADUNG
THERMAL DEVICE WITH SAFE DISCHARGING

(30) Priorité: 28.02.2017 FR 1751654
(43) Date de publication de la demande: 08.01.2020
(73) Titulaire: Hutchinson, 75008 Paris (FR)
(72) Inventeur: CHOPARD, Fabrice, 75008 Paris (FR); BLANCHARD, Clément, 75008 Paris (FR)
(74) Mandataire: Ernest Gutmann - Yves Plasseraud S.A.S.
(86) Numéro de dépôt international: PCT/FR2018/050467
(87) Numéro de publication internationale: WO 2018/158538

(56) Documents cités:
- CN-A- 101 546 843
- CN-U- 204 333 163
- GB-A- 2 289 976
- US-A1- 2013 192 792
- US-A1- 2016 264 018

## Description

La présente invention concerne la gestion thermique par l'intermédiaire de corps dont on utilise la chaleur latente, comme les corps, appelés matériaux, MCP (matériau à changement de phase).

Un MCP désigne un corps capable de changer d'état physique dans une plage de température restreinte. Le stockage thermique peut s'opérer par utilisation de sa Chaleur Latente (CL) : le corps peut alors stocker ou céder de l'énergie par simple changement d'état, tout en conservant une température et une pression sensiblement constante, celle du changement d'état.

Est ainsi en particulier ici visée une barrière thermique située autour ou le long d'une partie au moins d'au moins un moyen thermique qui peut chauffer excessivement et/ou entre au moins deux tels moyens thermiques, pour favoriser la maîtrise d'une élévation inappropriée de température de ce(s) moyen(s) thermique(s).

Dans US 2016/0229622 est divulguée une barrière thermique qui s'étend autour d'un tel « moyen thermique», la barrière comprenant :
- un premier élément contenant au moins un matériau MCP,
- et un élément isolant thermique.

Dans US 2016/0229622, le problème de la maîtrise d'une élévation inappropriée de température de moyens thermiques dissipateurs d'énergie thermique ne se pose pas, dès lors qu'il n'est a priori pas censé y avoir une production de chaleur élevée à maîtriser pour éviter un emballement de fonctionnement de ces moyens thermiques et/ou d'un dispositif fonctionnel dont ils pourraient être une composante. En outre, la barrière thermique précitée définit une enceinte entre le volume interne (avec le moyen thermique qui y est contenu) et un environnement extérieur où il n'est pas censé régner une chaleur excessive.

Par ailleurs, de US2016264018 A1 est connu un dispositif thermique comprenant :
- au moins un dit moyen thermique dissipant de l'énergie thermique, en fonctionnement,
- des moyens de gestion thermique de ce moyen thermique comprenant une enveloppe présentant un volume où un corps absorbeur de chaleur est disposé en échange thermique avec ledit moyen thermique alors dans une situation nominale de fonctionnement, et
- une communication (repérée 205,206 dans ce document) entre le volume de l'enveloppe et l'environnement extérieur.

De façon conventionnelle, nominale se dit d'une caractéristique, d'une performance d'un appareil (ici dudit moyen thermique), annoncée par le constructeur ou prévue par le cahier des charges.

Plus précisément, en l'espèce pour la gestion thermique en fonctionnement nominal (15 à 50 °C typiquement) d'une batterie d'accumulateurs électriques assemblés au sein d'une enveloppe rigide, des moyens de stockage thermique intégrés à cette batterie sont prévus, qui comprennent une enceinte contenant un MCP solide/liquide et présentant un volume d'échange thermique avec lesdits accumulateurs. Ce volume est délimité par au moins une partie de l'enveloppe. Et l'enceinte est munie d'un vase d'expansion apte à absorber les dilatations du MCP, au passage en phase liquide. Le vase d'expansion présente un volume interne prolongeant le volume d'échange thermique de l'enceinte.

Or, la problématique qui s'est ici posée aux inventeurs est liée à une maîtrise d'une élévation anormale de température d'un ou plusieurs moyens thermiques dissipateurs d'énergie thermique, hors fonctionnement nominal.

Le terme «moyen(s) thermique(s)» est à considérer comme se référant à des éléments fonctionnels (comme des cellules d'une batterie d'accumulateurs) qui, en fonctionnement, peuvent individuellement chauffer excessivement et ainsi risquer d'influer négativement sur le fonctionnement d'un tel moyen thermique adjacent, ou d'eux-mêmes continuer à dériver thermiquement jusqu'à endommagement voire destruction.

Mais le terme «moyen thermique» couvre aussi un élément d'un dispositif fonctionnel associé, comme dans le cas par exemple d'un ou plusieurs fluides qui circulerai(en)t dans un volume interne et dont il serait nécessaire de réguler/maîtriser une élévation inappropriée de température (par exemple de l'huile de l'eau ou de l'air, sur un circuit d'huile d'eau ou d'air d'un véhicule mû par un moteur thermique ou électrique).

Notamment sur un tel véhicule, l'environnement extérieur où il se situe, et donc auquel sont confrontés le « moyen thermique » et ses moyens de gestion thermique associés, peut-être à température élevée, 50°C, voire davantage. La chaleur produite en excès dans ledit volume interne pourrait alors ne pas s'évacuer. En outre, entre deux moyens thermiques (par exemple deux fluides contigus en circulation ou deux cellules adjacentes d'une batterie), un problème de transfert thermique excessif de l'un vers l'autre peut survenir.

CN101546843 traite aussi de cette question et divulgue une solution qui correspond au préambule de la revendication 1 ; mais l'enseignement de CN101546843 ne propose pas de solution adéquate au problème de transfert thermique excessif, sur des accumulateurs électriques d'une batterie.

L'invention vise, elle, à proposer une telle solution, et en donne une définition notamment en revendications 1 et 11.

La solution de l'invention diffère de celle de US2016264018A1:
- qui traite exclusivement du fonctionnement nominal d'une batterie,
- qui est dépourvue d'évacuation de MCP visant à éloigner ce MCP du moyen thermique producteur de chaleur (les accumulateurs),
- et qui prévoit au contraire de maintenir en permanence le MCP en contact notamment avec toute la surface d'échange thermique qui forme l'interface entre le MCP et l'enveloppe des accumulateurs, ceci dans le volume de stockage, en phase solide de ce MCP, et dans ce volume ainsi que dans ledit « vase d'expansion » coudé, en phase liquide du MCP.

La solution ci-dessus présentée prévoit quant à elle, s'il y a un fonctionnement en surchauffe (donc non nominal) du moyen thermique, d'évacuer vers l'extérieur le corps absorbeur de chaleur, donc en réduisant la surface d'échange thermique MCP/moyen thermique.

Dans l'invention, on cherche à évacuer un excès de chaleur générée.

Des exemples de dispositifs d'absorption de chaleur permettant une évacuation du fluide absorbant thermique, spécifiquement de l'eau avec ou sans additifs, sont décrits dans les documents US 2011/0274951, JP 2008/117756 et US 2014/0349145.

Avec la solution ci-dessus, on va tant pouvoir maintenir un échange thermique optimisé pendant le fonctionnement nominal du moyen thermique (dans sa gamme de températures maîtrisées) que limiter le risque d'emballement du moyen thermique, en situation anormale de surchauffe, en évacuant loin de lui une partie au moins d'un corps chargé de calories.

Compte tenu de son efficacité, il est en outre proposé que ledit corps absorbeur de chaleur soit un élément d'accumulation de chaleur latente apte:
- à absorber par changement de phase une quantité de chaleur dissipée par le moyen thermique, et
- à être évacué dans ladite évacuation, dans un état fluide dans lequel il s'est transformé, au-dessus d'une température prédéterminée, lors du changement de phase.

Pour si nécessaire pouvoir adapter le moment de l'évacuation précitée, il est proposé que le volume de l'enveloppe ou de chaque enveloppe communique avec cette évacuation par une communication qui puisse être fermée, telle une pastille qui se rompt sous une pression de vapeur générée, une paroi qui s'ouvre ou est ouverte (par exemple par déchirement sous pression ou effet d'augmentation de température : destruction thermique), dans la situation anormale de surchauffe du moyen thermique, ou encore un clapet.

Du fait de cette évacuation prévue « vers l'extérieur » d'une partie au moins dudit corps, la nature de ce corps a aussi été travaillée sur cet aspect.

Aussi est-il conseillé que l'état fluide dans lequel l'élément d'accumulation de chaleur latente se transforme, au-dessus de ladite température prédéterminée, soit un état gazeux.

Un gaz est facile à évacuer, naturellement. Et en le condensant, on peut le récupérer, plus loin. Sa température d'obtention à partir d'un liquide est élevée.

Selon une autre approche, il est proposé que ledit corps absorbeur de chaleur soit apte à être donc dans un tel état gazeux pour, dans ladite situation anormale de surchauffe du moyen thermique, pouvoir être ainsi évacué vers l'extérieur par ladite évacuation.

Les avantages seront les mêmes et on pourra alors par exemple choisir un MCP liquide/gazeux non particulièrement nocif pour l'environnement, tel un mélange à base d'eau.

C'est d'ailleurs dans ce cadre qu'il est prévu de faire communiquer ladite évacuation avec une partie supérieure du volume de l'enveloppe concernée. Ainsi, les vapeurs de MCP gazeux seront facilement collectés et évacués.

Etant donné qu'il devrait être typiquement intéressant d'appliquer la solution ici présentée en liaison avec une gestion thermique globale du moyen thermique, donc y compris en phase de fonctionnement nominal (c'est-à-dire dans la gamme de températures normales de fonctionnement des 25 à 35 °C pour des accumulateurs de batterie), il pourra être jugé utile que lesdits moyens de gestion thermique comprennent en outre des premier et second corps d'accumulation de chaleur latente disposés de part et d'autre du volume de ladite enveloppe à fonction de « fusible thermique ».

Typiquement, ces premier et second corps d'accumulation de chaleur latente pourront, pour une telle application « batterie », accumuler une partie au moins de l'énergie thermique dissipée par les accumulateurs en assurant un changement de phase vers 35°C, à quelques degrés près.

On pourra ainsi assurer un lissage des températures des accumulateurs avant toute éventuelle dérive thermique.

Une solution pertinente sera d'ailleurs qu'alors le dispositif thermique :
- comprenne lui-même au moins deux dits moyens thermique,
- et que les moyens de gestion thermique comprennent en outre des premier et second corps d'accumulation de chaleur latente respectivement disposés entre ledit volume de l'enveloppe « à fusible thermique » et les moyens thermiques.

Notamment dans ce cas, un intérêt pourra typiquement apparaître à ce que par ailleurs les moyens de gestion thermique comprennent en outre au moins un élément isolant thermique interposé entre le moyen thermique considéré et l'enveloppe contenant donc le corps absorbeur de chaleur.

Ainsi, en cas d'emballement thermique d'un premier moyen thermique alors par exemple qu'un second tel moyen est en fonctionnement nominal, on pourra d'abord, avec l'isolant thermique, empêcher que l'énergie thermique excessive dissipée par le premier moyen atteigne le second, puis, au-delà de cette barrière, laisser agir le « fusible thermique », qui absorbera d'abord une partie au moins de cette énergie puis l'évacuera à distance, a priori de façon non réversible, via cette évacuation prévue d'une partie du corps absorbeur de chaleur.

L'inverse pourra aussi être prévu : au moins deux dites enveloppes contenant le corps absorbeur de chaleur disposées de part et d'autre d'un élément isolant thermique, entre deux dits moyens thermiques.

Dans ce cas, en cas de montée excessive en température, le « fusible thermique » agira d'abord, puis l'isolant thermique. Cette solution est plus efficace thermiquement.

Pour évacuer une partie au moins du corps absorbeur de chaleur à l'écart non seulement du(des) moyen(s) thermique(s), mais aussi donc du volume qui le contenait en fonctionnement nominal du système, on pourra prévoir une enveloppe ouverte alors localement, pour présenter :
- une évacuation basse, afin de laisser par gravité couler une partie du corps absorbeur de chaleur s'il est alors liquide,
- et/ou une évacuation haute pour, s'il est alors gazeux, laisser ce gaz s'échapper.

Des conduits pourront guider le corps s'échappant.

Il est aussi proposé que le dispositif thermique puisse comprendre deux dites enveloppes :
- dans le volume de chacune desquelles sera disposé un dit corps absorbeur de chaleur,
- et dans lequel volume les moyens de gestion thermique comprendront en outre un système à vases communicants qui comprendra un conduit de communication faisant communiquer lesdits volumes des deux dites enveloppes.

Pour permettre :
- à ce système à vases communicants d'être facile à fabriquer et installer, et d'opérer de façon très efficace, voire, que ce système soit ou non présent,
- à un corps absorbeur de chaleur en phase liquide de s'échapper dudit volume qui le contenait tant que sa température n'était pas notablement supérieure à ladite température limite,
il est proposé que chaque enveloppe soit ouverte en partie inférieure pour un possible déplacement, dans ou hors dudit volume, du corps absorbeur de chaleur contenu, en phase liquide, et ceci dans la situation nominale de fonctionnement du moyen thermique alors moins chaude que la situation anormale de surchauffe.

Ce qui précède n'impose toutefois pas strictement que le corps absorbeur de chaleur soit tout le temps en phase liquide tant que la situation anormale de surchauffe n'a pas été atteinte : le corps absorbeur de chaleur pourrait être en phase solide aux températures les plus basses de fonctionnement du moyen thermique.

Et, pour permettre à un corps absorbeur de chaleur en phase gazeuse de s'échapper dudit volume, en situation de surchauffe, il est proposé que chaque enveloppe soit ouverte en partie supérieure.

Dans les deux cas, un avantage sera de permettre un déplacement naturel du corps absorbeur de chaleur, dans la phase dans laquelle il se trouve.

Outre le dispositif qui précède, est aussi concerné un procédé pour la mise en œuvre d'une gestion thermique d'au moins un moyen thermique dissipant de l'énergie thermique en fonctionnement.

Pour les mêmes considérations que ci-avant, il y est proposé :
- que soient placés à proximité les uns des autres :
   -- ledit au moins un moyen thermique,
   -- des moyens de gestion thermique du moyen thermique, comprenant au moins un volume où un corps à accumulation de chaleur latente par changement de phase est disposé en échange thermique avec ledit moyen thermique alors qu'il fonctionne, le corps à accumulation de chaleur latente ayant une température d'ébullition à pression atmosphérique au-delà de laquelle il passe dans un état gazeux, et

   - une communication entre le volume de l'enveloppe et l'environnement extérieur,
- qu'on prévoit un possible fonctionnement en situation anormale de surchauffe du moyen thermique, à une température supérieure à la température d'ébullition à pression atmosphérique dudit corps, et
- que, lors d'une dite situation anormale de surchauffe, on assure, par ladite communication et à cette température supérieure à ladite température d'ébullition à pression atmosphérique, un échappement du gaz dans lequel le corps s'est changé.

On aura compris que «possible» veut dire que l'évènement a été anticipé comme pouvant survenir et sa conséquence a été anticipée et gérée pour éviter une destruction du dispositif thermique, via le recours précité à un « fusible thermique haute température ».

Une description complémentaire en vue de la réalisation des moyens ici mis en œuvre est fournie ci-après, en référence aux dessins annexés où :
- la figure 1 est une coupe suivant la ligne I-I de la figure 2 montrant l'intérieur d'un boîtier logeant des accumulateurs électriques protégés thermiquement par le dispositif de l'invention,
- la figure 2 est une perspective extérieure des éléments montrés figure 1,
- la figure 3 montre la mise en place des accumulateurs électriques protégés thermiquement par le dispositif de l'invention dans le boîtier qui peut les recevoir,
- la figure 4 détaille en perspective des accumulateurs ou cellules électriques séparés deux à deux par des éléments de gestion thermique utilisés dans l'invention,
- la figure 5 montre une possible réalisation de deux enveloppes latérales métalliques prévues pour contenir chacune un dit corps absorbeur de chaleur avec, entre elles, une enveloppe complémentaire à souder périphériquement après y avoir placé un isolant thermique et y avoir, si souhaité, établi un vide primaire,

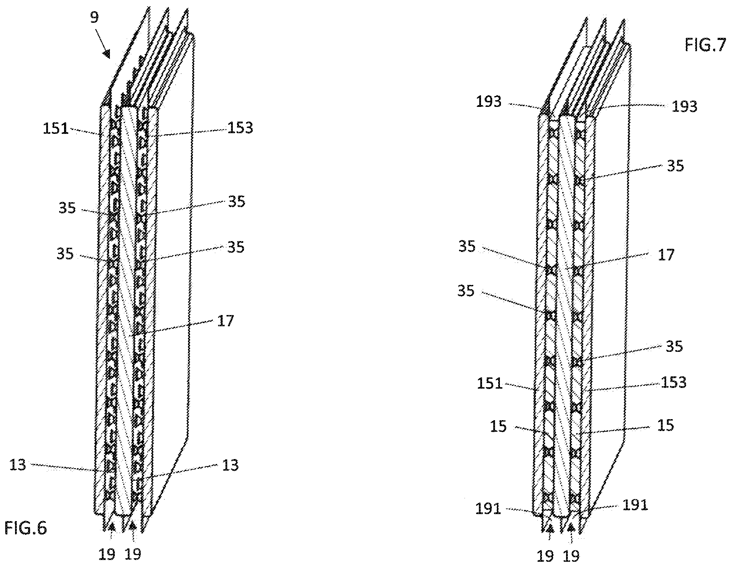

- les figures 6 et 7 montrent deux états ultérieurs, après soudage (figures 6,7) puis avec les deux enveloppes latérales métalliques remplies dudit corps absorbeur de chaleur (figure 7),
- les figures 8-9 sont des coupes suivant les lignes VIII-VIII et IX-IX, respectivement, de la figure 2,
- les figures 10-11 sont deux coupes, transversales comme les figures 1,9, mais plus locales et correspondant à une variante de la solution illustrée figures 1-3,8,9, dans deux états, respectivement alors que les corps absorbeurs de chaleur (15 ci-après) sont encore exclusivement dans les volumes internes 13 de leurs enveloppes (19 ci-après) respectives (figure 10), et s'en échappent (figure 11),
- les figures 12-15 montrent une enveloppe ouverte en bas et fermée sélectivement en haut, suivant les lignes de coupe XIII-XIII et XV-XV, pour les figures 13,15, respectivement, et
- la figure 16 est un agrandissement local de la figure 13, enveloppe sélectivement ouverte en haut (paroi 51 ci-après).

Sur les figures, certains pointillés attachés aux repères indiquent que le moyen concerné n'est pas forcément visible sur la figure illustrée, mais qu'il est présent, caché.

Sur les figures, on voit illustrée une application du dispositif thermique 1 de l'invention à la gestion thermique d'une batterie 3 destinée typiquement à un véhicule à propulsion électrique ou hybride, même si une batterie pour véhicule thermique peut aussi être concernée.

Comme déjà mentionné ceci n'est qu'un exemple d'application. En effet, par exemple dans un échangeur huile/eau ou liquide/gaz de véhicule, il pourrait être nécessaire de parer le risque d'une élévation inappropriée de température via le « fusible thermique » ici proposé.

Dans le cas d'application illustré et détaillé ci-après, la batterie 3 comprend plusieurs accumulateurs ou cellules 5 alignés et reliés entre eux de façon à créer un générateur électrique de tension et capacité désirée et dont on n'a illustré les connexions électriques ni entre elles ni avec l'environnement (bornes de raccordement pour distribuer l'électricité produite). Les bornes électriques de raccordement des cellules 5 sont repérées 50a,50b.

On n'a en outre ici pas représenté le cas possible où un dispositif thermique 1 à « fusible thermique » 7 serait disposé autour de l'ensemble des cellules 5 pour chercher à réguler/maîtriser une élévation inappropriée de température en périphérie de la batterie, entre les cellules 5 considérées dans leur ensemble et l'extérieur.

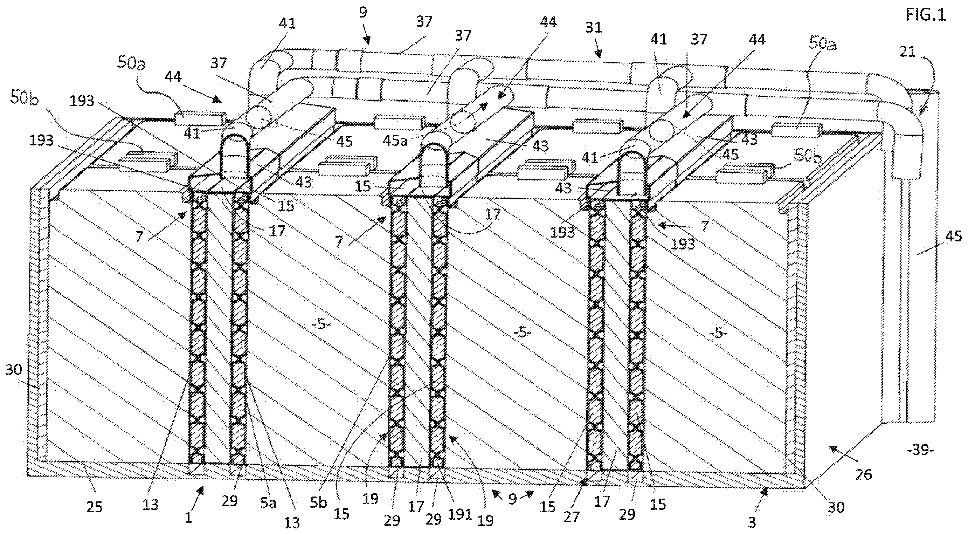

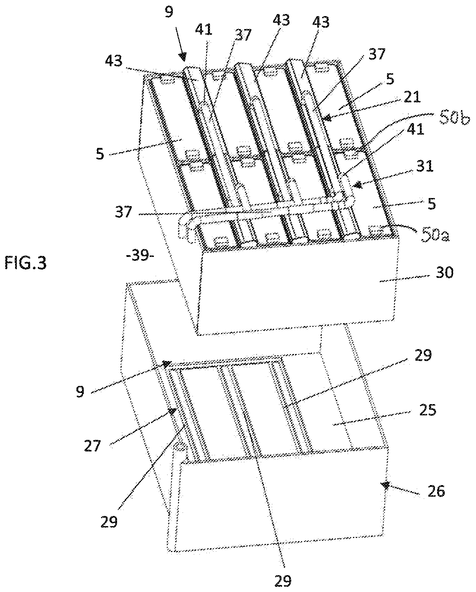

En effet, il est prévu dans les exemples présentés qu'autour de ces cellules 5 considérées dans leur ensemble, soient disposés plusieurs éléments à matériau(x) d'accumulation de chaleur latente 30 (figures 1,3,9 notamment) et/ou au moins une couche d'isolant thermique (par exemple un super-isolant à base d'aérogel de silice) de préférence disposée dans une enveloppe sous vide partiel, de type PIV (panneau isolant sous vide), en tant qu'éléments complémentaires appartenant aux moyens 9 de gestion thermique. Le tout pourra être mis en place dans un boîtier 26 ouvert vers le haut.

Ce qui suit est donc applicable à ce cas de figure, en respectant les propositions faites ci-avant avec si nécessaire les explications complémentaires qui suivent.

Le dispositif thermique 1 comprend :
- au moins une cellule 5, en tant que moyen thermique dissipant de l'énergie thermique, en fonctionnement,
- et des moyens 9 de gestion thermique de la/des cellules 5.

Dans ce qui suit, les cellules étant (arbitrairement) supposées chacune plates, elles ont chacune deux faces opposées 5a,5b.

Certains au moins des moyens 9 comprennent une enveloppe 19 présentant un volume interne 13 où un corps 15 absorbeur de chaleur est disposé en échange thermique avec ledit moyen thermique 5 alors que celui-ci est en situation de fonctionnement nominal.

Dans le cas de la batterie 3, cette situation sera celle où des cellules 5 produisent de l'énergie électrique à une température évoluant typiquement entre 15 et 60°C, de préférence entre 25 et 35°C.

Pour cela, on peut avoir prévu que les moyens 9 de gestion thermique comprennent, entre deux (faces de) cellules 5 successives, ou d'un côté au moins d'une telle (face de) cellule, au moins un élément 17 isolant thermique et/ou en outre au moins un, et de préférence deux (un par face) corps 15 d'accumulation de chaleur latente.

De préférence, et même si par exemple de l'eau (a priori non répertoriée comme MCP dans la littérature) pourrait être utilisée dans des exemples qui ne font pas partie de l'invention, ici chaque corps 15 sera un MCP. Et encore préférentiellement, et d'autant plus s'il s'agit d'un MCP, chaque corps sera soit à phases solide/liquide/gaz, soit à phases liquide/gaz.

A priori il y aura avantage à utiliser la seconde solution (changement de phase liquide/vapeur) par rapport à la première, ceci permettant en effet de viser une amélioration du coefficient d'échange via les régimes d'ébullition, une possibilité d'assurer une circulation fluide entre les différents volumes, une enthalpie de changement de phase (pour l'eau par exemple) beaucoup plus importante.

Pour un MCP à phases solide/liquide/gaz, on pourrait mélanger une phase fluide avec un matériau à changement de phase micro-encapsulé. De tels fluides utilisant de la paraffine existent. Cependant un ensemble de matériaux pourraient aussi être micro-encapsulés de manière à créer un liquide plus ou moins visqueux et plus ou moins chargé en MCP, avec alors des propriétés thermiques de stockage améliorées grâce à l'ajout du MCP. On peut aussi citer de l'eau en tant que phase fluide, laquelle devra être mise en mouvement pour éviter une stratification des microcapsules et/ou un dépôt qui pourrait obstruer les conduits 29.

Par ailleurs, on peut citer comme matériaux MCP à changement de phase pouvant être en partie ou non intégrés dans un fluide tel que l'eau : une paraffine, un sel hydraté, un dérivé lipidique, un eutectique.

Dans chaque cas, en phase la plus chaude, le fluide sera mis à profit pour évacuer avec lui, hors du volume 13 interne, des calories en excès.

Chaque enveloppe 19 sera adaptée pour, de préférence au moins à une température prédéterminée supérieure ou égale à celle maximum de ladite situation de fonctionnement nominale de la batterie (température dite limite du corps 15), pouvoir perdre une partie du corps contenu, ceci donc à un moment donc où une cellule 5 adjacente va commencer à chauffer excessivement, suite à un mauvais fonctionnement.

Ainsi, par exemple vers 60 ou 70°C (solution liquide) voire au-delà (solution gaz), alors que la température d'au moins un dit moyen thermique 5 est supérieure à ladite température limite du corps 15 à laquelle il change d'état, on va permettre au corps 15, suivant qu'il se trouve alors en phase liquide (s'il était antérieurement solide) ou gazeuse, de s'écouler, ou de s'évacuer par échappement gazeux, hors dudit volume. Le volume 13 va alors se vider d'une partie dudit corps.

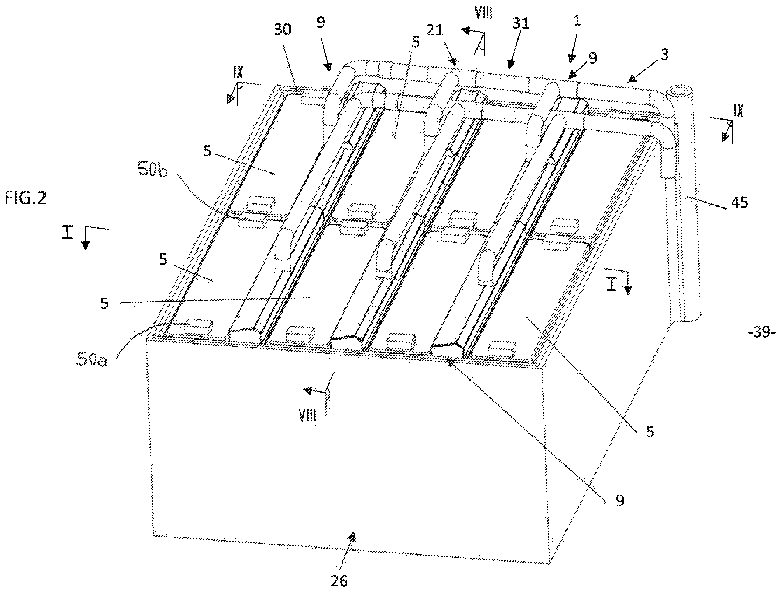

Pour cela, chaque volume 13 d'enveloppe 19 communique, au moins à ce moment, avec un conduit 21 d'évacuation pour, dans ladite situation anormale de surchauffe du moyen thermique 5, évacuer vers l'extérieur (31, figures 1-3), par ce conduit 21, une partie au moins dudit corps 15 qui y est alors encore contenu, et donc une part de la chaleur absorbée jusqu'alors par le corps.

Par rapport au volume 13, cette évacuation vers l'extérieur d'une partie au moins du corps 15 ayant changé d'état a pour effet d'éloigner du moyen thermique 5 la partie évacuée.

L'expression « conduit d'évacuation » est à comprendre au sens large comme correspondant à tout moyen permettant au corps 15 chargé en énergie thermique et se trouvant alors donc en phase fluide, de s'écouler, ou de s'évacuer par échappement gazeux, hors du volume 13.

Ainsi, on pourrait prévoir que l'enveloppe 19 soit localement en un matériau qui serait étanche aux liquides jusqu'à une température maximale (par exemple 70-80°C) et qui perdrait alors cette étanchéité, par exemple par désagrégation locale ou rupture d'une zone de moindre résistance mécanique, afin de laisser passer le liquide ou gaz d'une partie dudit corps 5 ainsi changé.

Tel n'est toutefois pas le cas en partie inférieure 191 de chaque enveloppe 19, dans la version préférée illustrée et décrite ci-après.

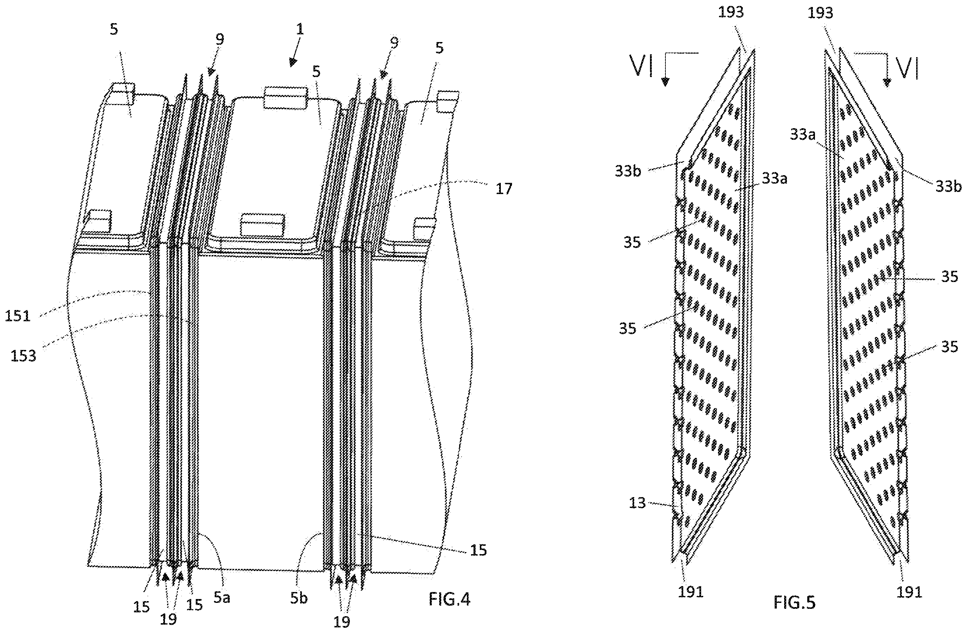

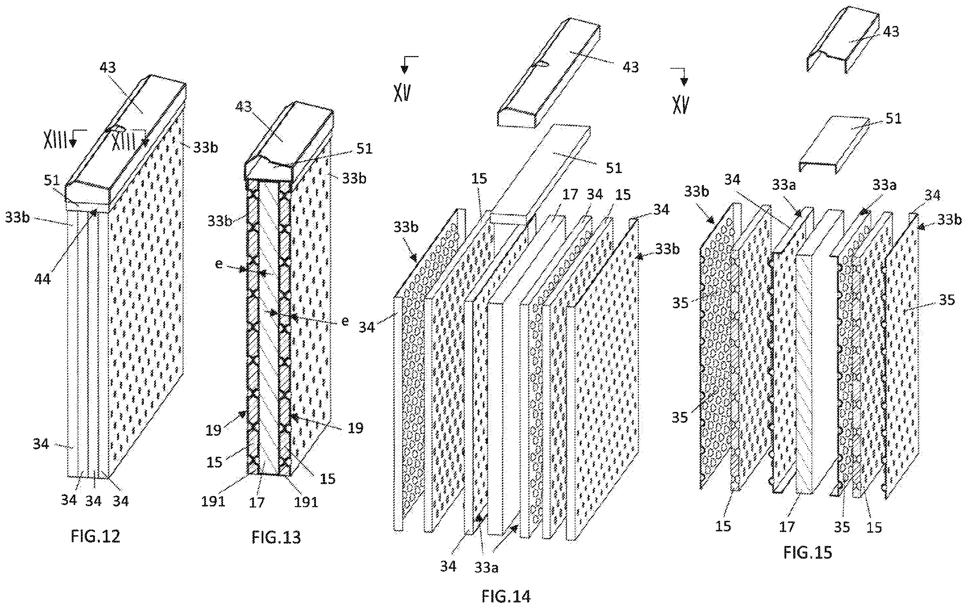

En effet, comme montré figure 5 par exemple, une solution peut être que chaque enveloppe 19 soit, de fabrication, ouverte en partie inférieure 191 pour un possible déplacement, hors dudit volume 13, du corps 15 absorbeur de chaleur que l'enveloppe contient, lorsque le corps est en phase liquide. L'étanchéité précitée jusqu'à une température maximale pourrait alors n'être prévue qu'en partie supérieure (193 ci-après ; voir figure 12-15) du volume 13 considéré.

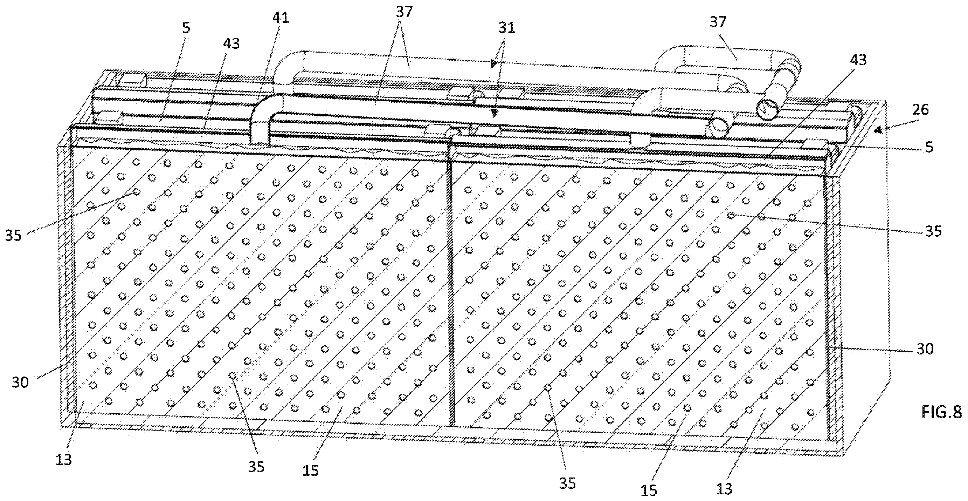

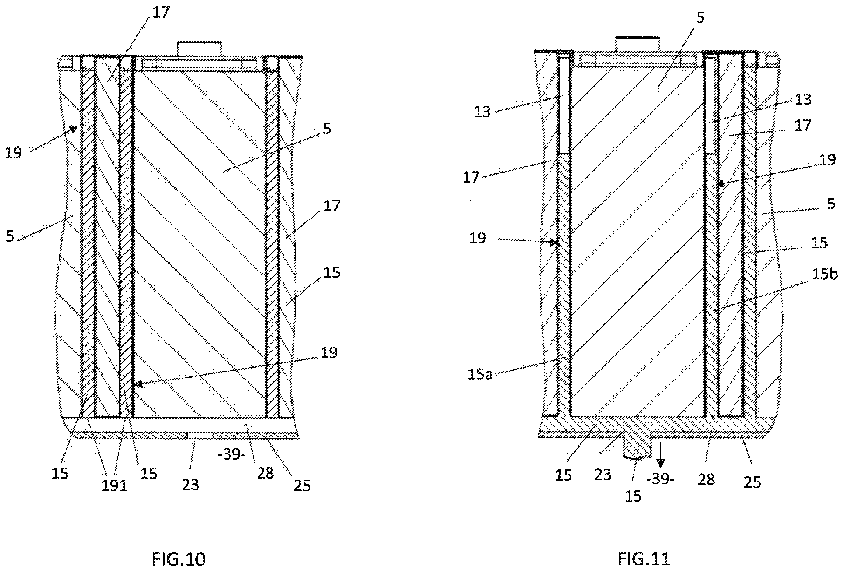

L'ouverte au moins en partie inférieure 191 sera en particulier appropriée, si le corps 15 présente une phase liquide, l'ouverture 191 inférieure pouvant alors communiquer avec un conduit 23 d'évacuation traversant le fond 25 où reposent les moyens thermiques 5 entre chaque paire desquels sont interposés les corps 15 dans leurs enveloppes 19, comme dans la réalisation des figures 10-11 qui est donc une variante de la solution illustrée figures 1-3,8,9. Figure 10, les corps 15 sont encore solides et exclusivement contenues dans leurs enveloppes 19. Figure 11, deux dits corps absorbeurs de chaleur, respectivement 15a-15b sont liquides et ont coulé par gravité vers un conduit 23 d'évacuation extérieur. Les niveaux dans les deux volumes 13 correspondants ont baissé. Si l'on veut éviter de percer trop de conduits 23 dans le fond, un ou plusieurs canaux 28 ménagés dans le fond 25 pourront relier entre eux les parties inférieures ouvertes des enveloppes 19, de façon notamment que les éventuels écoulements liquides de plusieurs corps 15 en cas de surchauffe de plusieurs moyens thermiques 5 soient collectés dans ces canaux de fond et guidés vers un conduit 23 d'évacuation commun.

Figures 1-3,8,9, mais aussi 11 à 15, l'ouverture en partie inférieure 191 de chaque enveloppe 19 est utilisée d'une autre manière, en particulier dans le cas où (ou du fait qu'ici) le corps est à changement de phases liquide/gaz.

En effet, alors que plusieurs enveloppes 19 à corps 15, ouvertes chacune en partie inférieure 191 sont disposées dans le boîtier 26, un système 27 à vases communicants qui comprend des conduits 29 de communication faisant communiquer entre eux lesdits volumes 13 des enveloppes est prévu vers le fond 25 du boîtier 26.

Les conduits 29 peuvent être des canaux ouverts vers le haut ménagés dans le fond 25 sous les volumes ouverts 13 et s'étendant entre eux.

Ainsi, il va être possible, alors que deux corps 15 sont liquides au moins en partie, de les faire communiquer de façon que si l'un au moins chauffe et passe déjà en partie en phase vapeur, la baisse de niveau du liquide dans un volume 13 puisse être compensée selon le principe des vases communicants.

Pour cela, on pourra n'avoir pas rempli entièrement (jusqu'en haut) en corps 15 les enveloppes 19.

Un aspect possiblement utile en combinaison avec ce système 27 de vases communicants (mais qui peut donc en être dissocié) concerne le système, ou moyen, d'échappement vapeur 31 de préférence par ailleurs prévu.

En effet si, en situation d'échauffement excessif d'au moins un moyen thermique 5, un corps 15 adjacent change de phase, et devient donc au moins en partie gazeux alors qui s'est chargé d'énergie thermique, son évacuation par échappement vapeur hors du volume 13 qui contenait jusqu'alors ce corps liquide va provoquer une baisse de niveau dans ledit volume. Or, si le système 27 de vases communicants est couplé à ce possible échappement vapeur, les niveaux dans les volumes ainsi raccordés vont alors s'équilibrer.

Pour permettre plus généralement l'échappement vapeur précitée par une évacuation 21, on a prévu dans l'exemple des figures 1-3,8,9 que (le volume de) chaque enveloppe 19 soit ouverte ou ouvrable en partie supérieure 193 pour un possible déplacement, hors du volume 13, du corps 15 considéré que l'enveloppe contenait lorsque le corps était en phase liquide.

Pour ouvrir une enveloppe 19 en parties supérieure 193 et/ou inférieure 191, on pourra la réaliser comme deux parois 33a,33b dressées face à face, par exemple métalliques, avec des entretoises, tels que des emboutis, 35 maintenant un écart entre elles pour y stocker le(un) corps 15 à accumulation de chaleur latente, comme schématisé figures 5 ou 12-15.

L'écart (I figure 13) entre les parois 33a,33b permettra, en bas, la communication avec le(s) conduit(s) 23 et/ou 28 ou 29 d'évacuation et donc possiblement le système 27 de vases communicants. En partie supérieure 193, cet écart permettra le raccordement au système d'échappement vapeur 31.

Dans l'exemple de la figure 5, que l'on retrouve figures 13,14, deux doubles parois 33a,33b sont fixées ensemble à l'endroit de leurs bords ou rebords respectifs 34, entièrement périphériques pour les deux parois 33a centrales prévues pour renfermer hermétiquement l'isolant 17 et uniquement latéraux pour les deux parois latérales 33b à fixer (par exemple souder) chacune à la paroi 33a centrale adjacente, comme on le comprend avec les figures 12,13,14,15.

Dans l'exemple des figures 1-3,8,9, privilégié car simple et efficace, le système 31 comprend des tubes ou tuyaux 37 de collecte raccordant les parties supérieures 193 avec l'extérieur 39 du dispositif 1 (et dans l'exemple de la batterie).

Ainsi, les vapeurs ou la phase gazeuse issue(s) d'un corps 15 jusqu'alors liquide va(vont) pouvoir s'échapper de chaque volume 13 concerné où de l'énergie thermique issue de moyens thermiques 5 en surchauffe a donc été stockée dans un premier temps. Cet échappement emportera avec lui une partie de ladite énergie thermique ainsi stockée.

De préférence, pour prévenir les retours du corps 15 en cas de condensation dans les tubes 37 de collecte, ces derniers seront inclinés vers le bas en direction de l'environnement extérieur 39, au-delà d'un coude supérieur 41.

Entre les tubes 37 de collecte et chaque partie supérieure 193 ouverte, des goulottes 43 ouvertes vers le bas pourront s'étendre le long et au-dessus de ces ouvertures et ainsi collecter et guider le gaz vers son évacuation extérieure.

Concernant chaque corps 15, il pourra donc s'agir d'un corps ou matériau MCP (pris dans son sens technico-commercial commun) qui sera de préférence de type solide/liquide ou liquide/gazeux. Dans l'exemple, un changement de phase chaude (fusion dans le cas solide/liquide) vers 60-70°C est prévue.

Quoi qu'il en soit, MCP ou pas, chaque corps 15 présentera de préférence, pour agir en tant qu'élément de fusible thermique comme requis, l'une parmi une enthalpie de changement de phase (ou de transition) de phase supérieure ou égale à 60 kJ/kg., sous pression atmosphérique et à la température de changement (ou de transition) de phase du MCP.

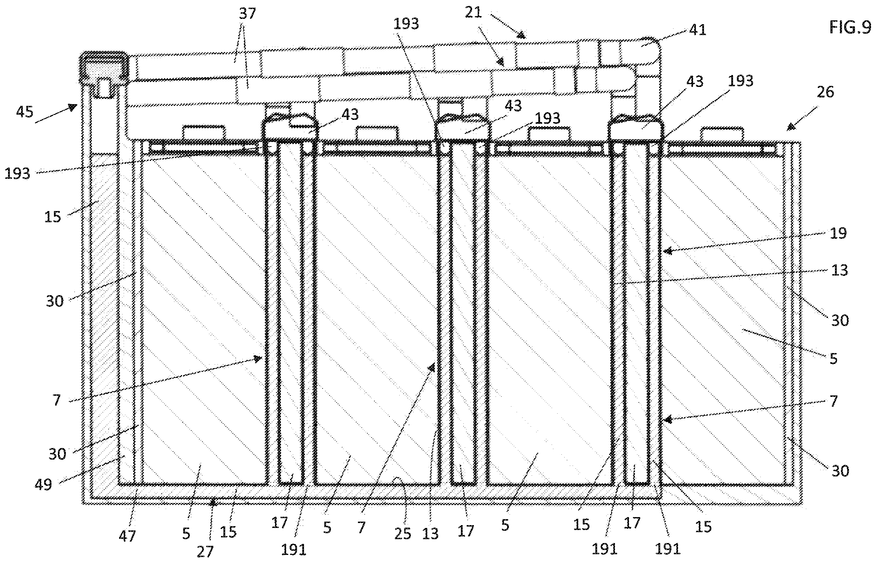

S'il est solide dans une phase, ce sera dans cette phase que le corps 15 concerné pourra être placé dans l'enveloppe 19, lors de la fabrication. Sinon, on pourra prévoir un réservoir 45 extérieur tampon raccordé aux volumes 13 par exemple par l'intermédiaire des canaux ou conduits 29, via au moins un conduit intermédiaire 47 passant à travers au moins une paroi latérale 49 du boîtier 26, comme montré figure 9. Ce système à réservoir pourrait être utilisé dans la variante des figures 10-11, via les canaux de fond 28 et dans l'état chaud, liquide, des corps 15, pour les volumes 13 qui seraient alors à remplir. L'évacuation 23 serait alors à boucher de façon sélective.

Notamment par mesure de sécurité et/ou pour un contrôle de la circulation des corps 15 vis-à-vis de leurs volumes 13, dans des états (liquide ou gazeux) le permettant, il est d'ailleurs proposé que chaque volume 13 communique avec l'évacuation (21,31 ; 23,28) par une communication 44 qui peut être fermée.

Deux solutions pratiques ont été plus particulièrement développées, dans le cas où les corps 15 ont une phase gazeuse et s'échappent par un système d'échappement vapeur, tel que 31 par exemple.

Ainsi, figure 1, est-il prévu des clapets 45 ou 45a sur le système d'échappement vapeur, typiquement dans les tubes 37 de collecte de vapeurs issues des corps 15. Chaque clapet sera avantageusement fermé, dans ladite situation de fonctionnement nominal des moyens thermiques 5 adjacents concernés. Si un moyen thermique 5 surchauffe et passe donc en situation anormale de fonctionnement, le(s) corps 15 adjacent(s) va(vont) se vaporiser au moins en partie. Supposons que tel est le cas des deux corps 15 centraux figure 1. Le clapet 45a va alors s'ouvrir et la vapeur pouvoir s'échapper vers l'évacuation extérieure correspondante.

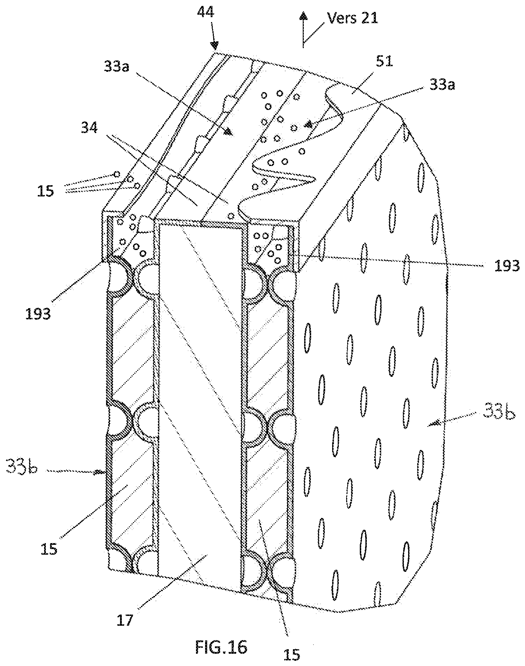

Autre possibilité illustrée figures 12-15 : La communication 44 qui peut être fermée comprend au moins une paroi 51 qui ferme de façon étanche la partie supérieure 193 de chaque volume 13 d'enveloppe 19 concernée, dans ladite situation de fonctionnement nominal du moyen thermique 5, et qui, dans la situation anormale de surchauffe de ce même moyen thermique 5, laisse passer le corps 15 vers l'évacuation 21 ; voir figures 13 et 16 notamment.

Dans le cas d'un corps 15 à phases liquide/gazeuse, la paroi 51 sera avantageusement étanche aux liquides mais perméable aux gaz.

Elle sera par ailleurs, et de préférence, adaptée pour s'ouvrir peu après que le corps 15 soit devenu au moins en partie gazeux dans le volume 13 concerné.

Sa perméabilité sélective lui permettra de laisser passer des gaz chauds vers l'évacuation 21, ceci avant même de s'ouvrir si tel est le cas.

Et sa capacité précitée à s'ouvrir sélectivement lui permettra de laisser un large passage auxdits gaz chauds s'échappant vers l'évacuation 21, ceci même si elle n'est pas perméable aux gaz.

L'ouverture sélective de la paroi 51 pourra être réalisée par désagrégation locale de sa matière (par exemple elle peut fondre) ou par rupture d'une zone de moindre résistance mécanique, dans des conditions de pression et/ou température données.

Ainsi, à une température prédéfinie supérieure à la température de changement de liquide en gaz des corps 15 et/ou correspondant à un début de surchauffe des moyens thermiques 5 (début de leur dite situation anormale de surchauffe), la paroi 51 peut-elle fondre ou se déchirer, par exemple sous pression.

On aura de la sorte évité qu'en cas de basculement ou renversement du dispositif 1 et/ou des moyens thermiques 5, du corps 15 se soit répandu inopinément, typiquement en coulant librement dans le ou hors du système d'échappement vapeur 31, même si ce dernier (et notamment les goulottes 43) est fixé de façon étanche aux liquides.

Outre le(s) corps 15 prévus comme précité, les moyens 9 de gestion thermique pourront comprendre des corps 151,153 additionnels d'accumulation de chaleur latente, dits premier et second corps et disposés de part et d'autre d'un dit volume 13 et donc de l'enveloppe 19 correspondante.

De la sorte, entre deux moyens thermiques 5 successifs, on pourra trouver interposés deux corps 151,153 additionnels encadrant au moins un volume 13 à corps 15.

Ces corps 151,153 additionnels pourront être en un matériau MCP, qui sera de préférence de type solide/liquide ou solide / solide, avec un changement de phase ou de cristallisation chaude (fusion dans le cas solide/liquide) à une température inférieure à celle du corps 15 précité.

Ainsi, le changement de phase permettant aux corps 151,153 additionnels de stocker de la chaleur latente issue de la dissipation d'énergie des moyens thermiques 5 s'opérera à une température inférieure à la température correspondante de changement de phase d'un dit corps 15.

Selon des exemples ne faisant pas partie de l'invention, cette température de changement des corps 151,153 additionnels sera favorablement comprise entre 15 et 60°C, de préférence de l'ordre de 28-38°C, pour une application à la batterie 3, dès lors que celle-ci est donc prévue avec un fonctionnement nominal et optimal entre 25 et 35°C, le tout à 10% près.

Il pourra en être de même pour le(s) éléments à matériau(x) d'accumulation de chaleur latente 30.

Ainsi, selon un exemple ne faisant pas partie de l'invention, on pourra prévoir un couple :
- avec au moins un (bloc de) dit corps 15 passant de liquide à gazeux entre 70°C à 130 °C (à 10°C près),
- et des corps 151,153 additionnels et/ou élément(s) à matériau(x) d'accumulation de chaleur latente 30 dont la transition, tel un changement d'état de solide à liquide, sera entre 15 et 60°C, est de préférence entre 15 à 45 °C.

Ainsi, avant que les corps 15 jouent leur rôle d'éléments de fusible thermique, les corps 151,153 additionnels seront intervenus en changeant de phase et en stockant de la chaleur latente issue des moyens thermiques 5, afin de prévenir leur emballement au-delà de leur gamme de températures de fonctionnement nominal.

Quant à l'isolant thermique 17 interposé lui aussi entre deux corps 15 successifs, il protégera thermiquement un de ces corps si l'autre s'échauffe excessivement.

Chaque isolant thermique 17 pourra être un élément en forme de plaque, tel une mousse ou un aérogel dans une matrice, et être donc disposé dans une enveloppe hermétique sous vide d'air formée par deux parois 33a dressées réunies pour définir un PIV (Panneau Isolant sous Vide) ; voir figures 12-15.

Concernant la combinaison isolant(s) thermique(s) 17 / corps 15 comme élément de fusible thermique, deux montages sont plus particulièrement envisagés.

Dans le premier cas, un corps 15 remplissant au moins essentiellement le volume 13 correspondant est interposé entre deux isolants thermiques 17 eux-mêmes donc interposés entre deux moyens thermiques 5 successifs, (avec donc éventuellement encore deux corps 151,153 additionnels interposés respectivement entre les isolants thermiques 17 et les moyens thermiques 5).

L'avantage est alors d'améliorer la prévention de transfert thermique d'un corps 15 à l'autre, via ces deux barrières isolantes 17.

Dans le second cas, un isolant thermique 17 est interposé entre deux corps 15 remplissant au moins essentiellement le volume 13 correspondant, eux-mêmes donc interposés entre deux moyens thermiques 5 successifs (avec toujours éventuellement les deux corps 151,153 additionnels latéraux).

L'avantage est alors d'offrir à chaque moyen thermique 5 un corps 15 à capacité d'évacuation d'énergie thermique, la barrière isolante 17 intermédiaire sécurisant malgré tout le dispositif vis-à-vis de l'emballement thermique à éviter, si lesdits fusibles thermiques à évacuation de calories n'ont pas suffi.

Notamment en utilisant les moyens et éléments précités, la mise en œuvre d'un procédé de gestion thermique d'au moins un dit moyen thermique 5 conforme à l'invention est prévue d'opérer comme suit :
- d'abord on devra trouver, placés à proximité les uns des autres (c'est-à-dire de façon adjacente) :
   -- au moins un tel moyen thermique 5,
   -- et des moyens 9 de gestion thermique de ce(s) moyen(s) thermique(s), comprenant donc au moins un volume 13 où un dit corps 15 à accumulation de chaleur latente par changement de phase (tel donc un MCP) est disposé en échange thermique avec ledit moyen thermique alors qu'il fonctionne, chaque corps 15 ayant préalablement été choisi de façon à présenter, monté dans le dispositif 1, une température d'ébullition à pression atmosphérique au-delà duquel il passe dans un état gazeux, en situation de surchauffe des moyens thermiques 5.
- ensuite, on aura raccordé chaque volume 13 considéré à l'évacuation 21/31 précitée permettant ainsi, à une température supérieure à ladite température d'ébullition à pression atmosphérique, un échappement du gaz dans lequel ledit corps s'est changé.

Ceci établi, alors que la température d'un ou plusieurs moyens thermiques 5 deviendra supérieure à la température limite de fonctionnement nominal, on permettra donc au (à chaque) corps 15 concerné de s'évacuer hors dudit volume 13 où il se trouvait à température plus basse. De la sorte, le(chaque) volume 13 concerné se videra d'une partie dudit corps 15.

Il est de nouveau précisé que la température du moyen thermique 5 concerné, qui est associée à la « température limite » du(des) corps 15 et à partir, ou au-delà, de laquelle le fonctionnement nominal de ce moyen 5 est altéré sera, dans l'application batterie ci-avant évoquée, favorablement comprise entre 15 et 50°C, de préférence de l'ordre de 28-38°C, dès lors que la batterie 3 est prévue avec un fonctionnement nominal et optimal entre 25 et 35°C, le tout à 10% près.

La situation suivante pourra aussi être rencontrée dans le cadre de l'invention, à savoir celle où un corps 15 à matériau à changement de phase fusible devra :
- être capable en fonctionnement normal d'absorber la dissipation d'énergie des moyens thermiques 5 (en particulier cellules de batterie) de manière à homogénéiser la température dans le module ; le changement de phase sera alors réversible et solide-liquide,
- être capable lorsqu'un moyen thermique 5 est en défaut (surchauffe) d'absorber l'énergie dégagée et de se vaporiser, avec alors évacuation par les voies d'échappement définies (évacuation(s) 21,31 ; 23,28); le changement de phase sera alors irréversible.

Un tel fonctionnement remet en cause la partie circulation du corps 15 entre les espaces 13, puisque le matériau n'est alors pas liquide.

Une solution pour contourner ce problème notamment dans une application batterie et en évitant la présence d'un "vase d'expansion" serait de combiner ce matériau MCP, lequel serait alors (micro-)encapsulé dans un fluide se vaporisant également à une température assez élevée, qui pourrait être comprise entre 75 et 150°C. Ce fluide pourrait alors être différent d'un MCP "du commerce".

Le ratio liquide et MCP encapsulé devra être évalué pour conserver une viscosité faible.

A titre d'exemple, on pourra prévoir : Fusion/Cristallisation du matériau du corps 15 entre 15 et 50 °C ; Vaporisation du matériau entre 75 et 150 °C.

## Revendications

1. Dispositif thermique comprenant :
- au moins un moyen thermique (5) dissipant de l'énergie thermique, en fonctionnement, le moyen thermique comprenant des cellules d'une batterie d'accumulateurs électriques,
- des moyens (9) de gestion thermique du moyen thermique (5), comprenant une enveloppe (19) présentant un volume (13) où un corps (15) absorbeur de chaleur est disposé, en échange thermique avec ledit moyen thermique (5) dans une situation nominale de fonctionnement, ledit corps (15) étant un élément d'accumulation de chaleur latente apte à absorber par changement de phase une quantité de chaleur dissipée par le moyen thermique (5), et
- une communication (21,31 ; 23,28) entre ledit volume (13) et l'environnement extérieur (39),
**caractérisé en ce que** :
- ladite communication définit une évacuation (21,31 ; 23,28) permettant, dans une situation anormale de surchauffe du moyen thermique (5), que soit évacuée, vers ledit environnement extérieur et plus à l'écart du moyen thermique que l'est ledit volume, une partie au moins dudit corps (15) alors dans un état gazeux, et,
- l'enveloppe (19) comprend deux parois (33a,33b) face à face, maintenant un écart entre elles pour qu'y soit contenu le corps (15), et l'une au moins des caractéristiques suivantes est réalisée :
- ledit élément d'accumulation de chaleur latente est encapsulé dans un fluide se vaporisant entre 75°C et 150°C,
- ledit élément d'accumulation de chaleur latente présente une température de fusion entre 15°C et 50°C et une température d'ébullition entre 75°C et 150°C.

2. Dispositif thermique selon la revendication 1, dans lequel ladite communication (21,31 ; 23,28) est adaptée à assurer, à une température qui est supérieure à la température d'ébullition dudit corps (15) et à pression atmosphérique, l'échappement, vers ledit environnement extérieur (39), du gaz dans lequel ledit corps (15) s'est changé.

3. Dispositif thermique selon l'une des revendications précédentes, dans lequel ledit corps (15) absorbeur de chaleur présente une enthalpie de changement de phase supérieure ou égale à 60 kJ/kg, sous pression atmosphérique et à la température de changement de phase dudit corps (15).

4. Dispositif thermique selon l'une des revendications précédentes, dans lequel les moyens (9) de gestion thermique du moyen thermique (5) comprennent en outre au moins un élément (17) isolant thermique situé :
- entre deux cellules (5) successives, ou
- entre deux emplacements successifs du volume (13) où le corps (15) absorbeur de chaleur est présent.

5. Dispositif thermique selon la revendication 4, dans lequel chaque élément (17) isolant thermique comprend un élément en forme de plaque disposé dans une enveloppe hermétique sous vide d'air formée par lesdites deux parois (33a) réunies pour définir un panneau isolant sous vide.

6. Dispositif thermique selon l'une des revendications précédentes:
- dans lequel les moyens (9) de gestion thermique du moyen thermique (5) comprennent en outre des premier et second corps (151,153) d'accumulation de chaleur latente,
- qui comprend au moins deux dits moyens thermiques (5), et
- dans lequel les premier et second corps (151,153) d'accumulation de chaleur latente sont disposés respectivement entre ledit volume (13) de l'enveloppe (19) et les deux dits moyens thermiques (5).

7. Dispositif thermique selon l'une des revendications précédentes :
- qui comprend deux dites enveloppes (19) dans le volume (13) de chacune desquelles est disposé un dit corps (15) absorbeur de chaleur et
- dans lequel les moyens (9) de gestion thermique du moyen thermique (5) comprennent en outre un système (27) à vases communicants qui comprend un conduit de communication (23) faisant communiquer lesdits volumes (5) des deux dites enveloppes (19).

8. Dispositif thermique selon l'une des revendications précédentes, dans lequel le corps (15) est apte à être dans une phase liquide, dans ladite situation nominale de fonctionnement du moyen thermique (5) moins chaude que ladite situation anormale de surchauffe, et l'enveloppe (19) est ouverte en partie inférieure (191) pour un possible déplacement, dans ou hors dudit volume, dudit corps (15) que l'enveloppe contient, lorsque le corps est en phase liquide.

9. Dispositif thermique selon l'une des revendications précédentes, dans lequel l'enveloppe (19) est ouverte en partie supérieure pour ladite évacuation, hors du volume, du corps (15) absorbeur de chaleur que l'enveloppe contient, lorsque le corps est en phase gazeuse.

10. Dispositif thermique selon l'une des revendications précédentes, dans lequel les moyens (9) de gestion thermique du moyen thermique (5) sont disposés autour de l'ensemble des cellules, entre l'ensemble des cellules et ledit environnement extérieur (39).

11. Procédé pour la mise en œuvre d'une gestion thermique de cellules (5) d'une batterie d'accumulateurs électriques dissipant de l'énergie thermique en fonctionnement, dans lequel procédé on trouve, placés à proximité les uns des autres :
- lesdites cellules (5),
- des moyens (9) de gestion thermique desdites cellules, comprenant au moins une enveloppe (19) présentant au moins un volume (13) où un corps (15) à accumulation de chaleur latente par changement de phase est disposé en échange thermique avec les cellules (5) alors qu'elles fonctionnent, le corps (15) à accumulation de chaleur latente ayant une température d'ébullition à pression atmosphérique au-delà de laquelle il passe dans un état gazeux, et
- une communication (21,31 ; 23,28) entre le volume (13) de l'enveloppe (19) et l'environnement extérieur (39),
**caractérisé en ce que** :
- a) on réalise ladite au moins une enveloppe (19) de façon qu'elle comprenne deux parois (33a,33b) disposées face à face avec un écart entre elles pour qu'y soit présent le corps (15), et on prévoit un possible fonctionnement en situation anormale de surchauffe des cellules (5), à une température supérieure à la température d'ébullition à pression atmosphérique dudit corps (15),
- b) ledit corps (15) est encapsulé dans un fluide se vaporisant entre 75°C et 150°C, ou ledit corps (15) présente une température de fusion entre 15°C et 50°C et une température d'ébullition entre 75°C et 150°C, et
- c) lors d'une dite situation anormale de surchauffe, on assure, par ladite communication et à cette température supérieure à ladite température d'ébullition, à pression atmosphérique, un échappement, dans ledit environnement extérieur (39), du gaz dans lequel ledit corps (15) s'est changé, de façon irréversible.

12. Procédé selon la revendication 11 dans lequel à l'étape a), on interpose un isolant thermique :
- entre deux cellules (5) successives, ou
- entre deux emplacements successifs du volume (13) où le corps (15) absorbeur de chaleur est présent.

13. Procédé selon la revendication 11 dans lequel :
- on prévoit deux dites enveloppes (19), dans le volume (13) de chacune desquelles est présent un dit corps (15) absorbeur de chaleur, et
- par un système (27) à vases communicants qui comprend un conduit de communication (23), on fait communiquer lesdits volumes (5) des deux dites enveloppes (19).

14. Procédé selon l'une des revendications 11 à 13 dans lequel l'écart entre les deux parois (33a,33b) disposées face à face est adapté à permettre, en partie supérieure (193) où l'enveloppe (19) est ouverte, le raccordement à ladite communication d'échappement du gaz.

15. Véhicule comprenant le dispositif thermique selon l'une des revendications 1 à 10, ou sur lequel est mis en œuvre le procédé selon l'une des revendications 11 à 14, le véhicule étant situé dans ledit environnement extérieur (39).

## Patentansprüche

1. Thermische Vorrichtung, enthaltend:
- zumindest eine thermische Einrichtung (5), die im Betrieb Wärmeenergie abgibt, wobei die thermische Einrichtung Zellen einer Batterie von elektrischen Akkumulatoren enthält,
- Mittel (9) zum Wärmemanagement der thermischen Einrichtung (5), enthaltend eine Hülle (19) mit einem Raum (13), in dem ein wärmeabsorbierender Körper (15) in Wärmeaustausch mit der thermischen Einrichtung (5) in einem Soll-Betriebszustand angeordnet ist, wobei der Körper (15) ein Latentwärmespeicherelement ist, das dazu geeignet ist, durch Phasenänderung eine von der thermischen Einrichtung (5) abgegebene Wärmemenge zu absorbieren, und
- eine Verbindung (21, 31; 23, 28) zwischen dem Raum (13) und der äußeren Umgebung (39),
**dadurch gekennzeichnet, dass**
- die Verbindung eine Ableitung (21, 31; 23,28) definiert, die es in einem anormalen Überhitzungszustand der thermischen Einrichtung (5) ermöglicht, dass zumindest ein Teil des Körpers (15), der sich dann in einem gasförmigen Zustand befindet, in die äußere Umgebung und weiter entfernt von der thermischen Einrichtung als von dem Raum abgeleitet wird, und
- die Hülle (19) zwei einander gegenüberliegende Wände (33a, 33b) umfasst, die einen Abstand zwischen sich aufrechterhalten, um darin den Körper (15) zu enthalten, und zumindest eines der folgenden Merkmale ausgeführt ist, wobei:
- das Latentwärmespeicherelement in einem Fluid eingekapselt ist, das bei zwischen 75°C und 150°C verdampft,
- das Latentwärmespeicherelement eine Schmelztemperatur zwischen 15°C und 50°C und eine Siedetemperatur zwischen 75°C und 150°C aufweist.

2. Thermische Vorrichtung nach Anspruch 1,
wobei die Verbindung (21, 31; 23, 28) dazu ausgelegt ist, bei einer Temperatur, die höher ist als die Siedetemperatur des Körpers (15), und bei Atmosphärendruck das Entweichen von Gas, in das sich der Körper (15) verwandelt hat, in die äußere Umgebung (39) sicherzustellen.

3. Thermische Vorrichtung nach einem der vorhergehenden Ansprüche,
wobei der wärmeabsorbierende Körper (15) bei Atmosphärendruck und bei der Phasenänderungstemperatur des Körpers (15) eine Phasenänderungsenthalpie höher oder gleich 60 kJ/kg aufweist.

4. Thermische Vorrichtung nach einem der vorhergehenden Ansprüche,
wobei die Mittel (9) zum Wärmemanagement der thermischen Einrichtung (5) ferner zumindest ein wärmeisolierendes Element (17) umfassen, das angeordnet ist
- zwischen zwei aufeinanderfolgenden Zellen (5), oder
- zwischen zwei aufeinanderfolgenden Stellen des Raums (13), in dem sich der wärmeabsorbierende Körper (15) befindet.

5. Thermische Vorrichtung nach Anspruch 4,
wobei jedes wärmeisolierende Element (17) ein plattenförmiges Element aufweist, das in einer luftleeren, hermetisch dichten Hülle angeordnet ist, die von den beiden Wänden (33a) gebildet wird, die miteinander verbunden sind, um ein Vakuumisolationspaneel zu definieren.

6. Thermische Vorrichtung nach einem der vorhergehenden Ansprüche,
- wobei die Mittel (9) zum Wärmemanagement der thermischen Einrichtung (5) ferner einen ersten und einen zweiten Latentwärmespeicherkörper (151, 153) umfassen,
- enthaltend zumindest zwei thermische Einrichtungen (5), und
- wobei der erste und der zweite Latentwärmespeicherkörper (151, 153) zwischen dem Raum (13) der Hülle (19) und den beiden jeweiligen thermischen Einrichtungen (5) angeordnet sind.

7. Thermische Vorrichtung nach einem der vorhergehenden Ansprüche,
- enthaltend zwei Hüllen (19), in deren Raum (13) jeweils ein wärmeabsorbierender Körper (15) angeordnet ist, und
- wobei die Mittel (9) zum Wärmemanagement der thermischen Einrichtung (5) ferner ein System (27) mit kommunizierenden Gefäßen umfassen, das eine Verbindungsleitung (23) aufweist, die die Räume (5) der beiden Hüllen (19) miteinander verbindet.

8. Thermische Vorrichtung nach einem der vorhergehenden Ansprüche,
wobei der Körper (15) geeignet ist, im Soll-Betriebszustand der thermischen Einrichtung (5), der weniger heiß ist als der anormale Überhitzungszustand, in einer flüssigen Phase vorzuliegen, und die Hülle (19) im unteren Bereich (191) offen ist für eine mögliche Bewegung des Körpers (15), den die Hülle enthält, in den Raum oder aus diesem heraus, wenn der Körper in der flüssigen Phase ist.

9. Thermische Vorrichtung nach einem der vorhergehenden Ansprüche,
wobei die Hülle (19) im oberen Bereich offen ist für die Ableitung des wärmeabsorbierenden Körpers (15), den die Hülle enthält, aus dem Raum, wenn der Körper in der gasförmigen Phase ist.

10. Thermische Vorrichtung nach einem der vorhergehenden Ansprüche,
wobei die Mittel (9) zum Wärmemanagement der thermischen Einrichtung (5) zwischen sämtlichen Zellen und der äußeren Umgebung (39) um sämtliche Zellen herum angeordnet sind.

11. Verfahren zur Durchführung eines Wärmemanagements von Zellen (5) einer Batterie von elektrischen Akkumulatoren, die im Betrieb Wärmeenergie abgeben, wobei bei dem Verfahren nahe beieinander angeordnet sind:
- die genannten Zellen (5),
- Mittel (9) zum Wärmemanagement der Zellen, die zumindest eine Hülle (19) mit zumindest einem Raum (13) umfassen, in dem ein Körper (15) zur Speicherung von latenter Wärme durch Phasenänderung in Wärmeaustausch mit den Zellen (5) angeordnet ist, während diese in Betrieb sind, wobei der Latentwärmespeicherkörper (15) eine Siedetemperatur bei Atmosphärendruck hat, über die hinaus er in einen gasförmigen Zustand übergeht, und
- eine Verbindung (21, 31; 23, 28) zwischen dem Raum (13) der Hülle (19) und der äußeren Umgebung (39),
**dadurch gekennzeichnet, dass**
- a) die zumindest eine Hülle (19) so ausgebildet ist, dass sie zwei Wände (33a, 33b) aufweist, die einander gegenüberliegend mit einem Abstand dazwischen angeordnet sind, um darin den Körper (15) zu enthalten, und ein möglicher Betrieb in einem anormalen Überhitzungszustand der Zellen (5) bei einer Temperatur vorgesehen ist, die höher ist als die Siedetemperatur des Körpers (15) bei Atmosphärendruck,
- b) der Körper (15) in einem Fluid eingekapselt ist, das bei zwischen 75°C und 150°C verdampft, oder der Körper (15) eine Schmelztemperatur zwischen 15°C und 50°C und eine Siedetemperatur zwischen 75°C und 150°C aufweist, und
- c) in einem anormalen Überhitzungszustand mittels der Verbindung bei dieser Temperatur, die höher ist als die Siedetemperatur, und bei Atmosphärendruck ein Entweichen von Gas, in das sich der Körper (15) auf irreversible Weise verwandelt hat, in die äußere Umgebung (39) sichergestellt wird.

12. Verfahren nach Anspruch 11,
wobei in Schritt a) ein Wärmeisolator eingefügt wird
- zwischen zwei aufeinanderfolgenden Zellen (5) oder
- zwischen zwei aufeinanderfolgenden Stellen des Raums (13), wo der wärmeabsorbierende Körper (15) vorliegt.

13. Verfahren nach Anspruch 11, wobei
- zwei Hüllen (19) vorgesehen werden, in deren Raum (13) jeweils ein wärmeabsorbierender Körper (15) vorliegt, und
- durch ein System (27) mit kommunizierenden Gefäßen, das eine Verbindungsleitung (23) aufweist, die Räume (5) der beiden Hüllen (19) miteinander verbunden werden.

14. Verfahren nach einem der Ansprüche 11 bis 13,
wobei der Abstand zwischen den beiden gegenüberliegend angeordneten Wänden (33a, 33b) dazu geeignet ist, im oberen Bereich (193), wo die Hülle (19) offen ist, den Anschluss an die Gasaustrittsverbindung zu ermöglichen.

15. Fahrzeug, enthaltend die thermische Vorrichtung nach einem der Ansprüche 1 bis 10 oder bei der das Verfahren nach einem der Ansprüche 11 bis 14 durchgeführt wird, wobei sich das Fahrzeug in der äußeren Umgebung (39) befindet.

## Claims

1. Thermal device comprising:
- at least one thermal means (5) dissipating thermal energy, in operation, the thermal means comprising cells of an electric storage battery,
- means (9) for thermally managing the thermal means (5), comprising an enclosure (19) having a volume (13) in which a heat-absorbing substance (15) is disposed in thermal exchange with said thermal means (5), in a nominal operating situation, said substance being a latent heat storage element suitable to absorb by phase change a quantity of heat dissipated by the thermal means, and
- a channelling (21,31; 23,28) between the volume (13) of the enclosure (19) and the outside environment (39),
**characterized in that**:
- said channelling defines a discharge (21, 31; 23, 28) allowing, in an abnormal overheating situation of the thermal means (5), that at least a part of said substance (15) then in a gaseous phase is evacuated towards said outside environment further away from the thermal means than said volume, and,
- the enclosure (19) comprises two walls (33a,33b) face to face, maintaining a distance between them to store the substance 15, and at least one of the following characteristics is realized:
- the said latent heat storage element is encapsulated in a fluid that vaporizes between 75 and 150°C,
- the said latent heat storage element has a melting temperature between 15°C and 50°C and a boiling temperature between 75 and 150°C.

2. Thermal device according to claim 1, wherein said discharge (21,31;23,38) is suitable to allow, at a temperature higher than said boiling temperature of said substance (15) at atmospheric pressure, towards said outside environment (39), the gas in which said substance (15) has changed.

3. Thermal device according to one of the preceding claims, wherein said heat-absorbing substance (15) has one of a phase change enthalpy of 60kJ/kg or more, under atmospheric pressure and at the phase change temperature of said heat-absorbing substance (15).

4. Thermal device according to one of the preceding claims, wherein the means (9) for thermally managing the thermal means (5) further comprise at least one thermal insulating element (17) located:
- between two successive cells (5), or
- between two successive locations in the volume (13) where the heat-absorbing substance (15) is present.

5. Thermal device according to claim 4, wherein each thermal insulating element (17) comprises a plate-shaped element placed in an air-vacuum sealed enclosure formed by two vertical walls (33a) joined together to define a vacuum insulation panel.

6. Thermal device according to one of the preceding claims,
- wherein the means (9) for thermally managing the thermal means (5) further comprise first and second latent heat storage substances (151, 153),
- which comprises at least two said thermal means (5), and
- wherein the first and second latent heat storage substances (151, 153) are disposed respectively between said volume (13) of the enclosure (19) and said two thermal means (5).

7. Thermal device according to one of the preceding claims,
- which comprises two said enclosures (19) in the volume (13) of each of which one said heat absorbing substance (15) is arranged, and
- in which the means (9) for thermally managing the thermal means (5) further comprise a communicating vessels system (27) which includes a communication (23) for having said volumes (5) of said two enclosures (19) to communicate with each other.

8. Thermal device according to one of the preceding claims, wherein the heat-absorbing substance (15) is capable of being in a liquid phase, in said nominal operating situation of the thermal means (5) less hot than said abnormal overheating situation, and the or each enclosure (19) is open at the bottom (191) for a possible movement, in or out of said volume, of said heat absorbing substance (15) that the enclosure contains, when the heat-absorbing substance is in the liquid phase.

9. Thermal device according to one of the preceding claims, wherein the enclosure (19) is open at the top for a possible movement out of said volume of the heat absorbing substance (15) contained in the enclosure, when the substance is in the gaseous phase.

10. Thermal device according to one of the preceding claims, wherein the means (9) for thermally managing the thermal means (5) are placed around all cells, between cells and said outside environment (39).

11. Method for thermally managing cells (5) of an electrical storage battery dissipating thermal energy during operation, in which method the following elements are located near each other:
- said cells (5).
- means (9) for thermally managing the cells, comprising at least one enclosure (19) presenting at least one volume (13) where a latent heat storage substance (15) by phase change is disposed for exchanging heat with the cells (5) while in operation, the latent heat storage substance (15) having a boiling temperature at atmospheric pressure beyond which it passes into a gaseous phase, and
- a channelling (21,31; 23,28) between the volume (13) of the enclosure (19) and the outside environment (39),
**characterized in that**:
- a) said at least one enclosure (19) is implemented so that it comprises two walls (33a,33b) placed face to face with a distance between them such that the substance (15) is present therein, and an eventual operation in an abnormal overheating situation of the cells (5) is expected, at a temperature higher than the boiling temperature at atmospheric pressure of said latent heat storage substance (15), and
- b) said substance (15) is encapsulated in a fluid vaporizing between 75°C and 150°C, or the said substance (15) has a melting temperature between 15°C and 50°C and a boiling temperature between 75°C and 150°C, and
- c) during an overheating abnormal situation, an exhaust is ensured irreversibly, thanks to said discharge and to said temperature higher than said boiling temperature at atmospheric pressure, to said outside environment (39), of the gas in which said substance (15) has changed.

12. Method according to claim 11 wherein at step a), a thermal insulating element is interposed:
- between two successive cells (5), or
- between two successive locations in the volume (13) where the heat-absorbing substance (15) is present.

13. Method according to claim 11 wherein:
- two said enclosures (19) are provided, in the volume of which is present a said heat-absorbing substance (15), and
- by a system (27) of communicating vessels which includes a communication conduit (23), said volumes (5) of said two enclosures (19) communicate with each other.

14. Method according to claim 11 to 13, wherein the distance between two walls (33a, 33b) placed face to face is suitable to allow, in upper part (193) where the enclosure (19) is open, the connection to the gas exhaust system.

15. Vehicle comprising the thermal device according to one of claims 1 to 10, or on which is implemented the method according to one of claims 11 to 14, the vehicle being located in the outside environment (39).
